**Europäisches Patentamt**

**European Patent Office**

**Office européen des brevets**

(19)

(11) Veröffentlichungsnummer: **0 101 025**
**B1**

(12) **EUROPÄISCHE PATENTSCHRIFT**

(45) Veröffentlichungstag der Patentschrift:
**09.12.87**

(51) Int. Cl.⁴: **B 65 G 47/24**, B 65 G 47/92

(21) Anmeldenummer: **83107726.8**

(22) Anmeldetag: **05.08.83**

(54) **Wendeeinrichtung in einer Förderstrecke zwischen zwei Bearbeitungsmaschinen.**

(30) Priorität: **14.08.82 DE 3230350**

(43) Veröffentlichungstag der Anmeldung:
**22.02.84 Patentblatt 84/8**

(45) Bekanntmachung des Hinweises auf die Patenterteilung:
**09.12.87 Patentblatt 87/50**

(84) Benannte Vertragsstaaten:
**DE FR GB IT SE**

(56) Entgegenhaltungen:
**FR - A - 2 169 712**
**US - A - 3 529 710**

(73) Patentinhaber: **L. SCHULER GmbH,
Bahnhofstrasse 41 - 67 Postfach 1222,
D-7320 Göppingen (DE)**

(72) Erfinder: **Dangelmaier, Karl, Glockenweg 13,
D-7320 Göppingen (DE)**

ACTORUM AG

## Beschreibung

Die Erfindung betrifft eine Wendeeinrichtung der im Oberbegriff des Anspruchs 1 angegebenen Art.

Nach der Ausgabe der Platinen aus der Presse, der Nutenstanze, dem Nutautomaten sind diese ebenen Werkstücke, wie beispielsweise Lochbleche, Motorenbleche u.dgl, weiteren Bearbeitungs- und Behandlungsverfahren, wie dem Oberflächenschleifen zum Entfernen des geringen Stanzgrates, zu unterziehen. Diese Bearbeitungsstufe erfolgt von oben, und es ist daher erforderlich, die Werkstücke mit der Gratseite nach oben zu wenden.

Wendeeinrichtungen sind bekannt geworden insbesondere zum Wenden von Ziehteilen vor der nächsten Bearbeitungsstufe in einer Folgepresse. In der DE-A-24 47 210 ist eine Wendeeinrichtung für plattenförmige Werkstücke beschrieben worden mit Werkstückfördereinrichtungen für den Transport der Werkstücke vor dem Wendebereich, durch diesen und zum Weiterleiten und mit einer an einer drehbar gelagerten Wendewelle sternförmig angeordneten Werkstückaufnahmeeinrichtung. Diese besteht im wesentlichen aus einem Wendekreuz mit vier zueinander versetzten Wendegabeln, die nacheinander mit dem Zuführrollengang und dem Abführrollengang in Eingriff bringbar sind. Die Werkstücke werden über die angetriebenen Rollen des Zuführrollenganges bis zur Anlage an Anschläge in den Wendegabeln geführt und nach einer Drehung des Wendekreuzes um 180 Winkelgrad von den gleichfalls angetriebenen Rollen des Abführrollenganges erfasst und weiter bewegt. Die Rollen der Rollengänge greifen hierbei durch die Wendegabeln und es sind diese und die in den Wendebereich hineinreichenden Rollengangführungen derart ausgebildet, dass die Wendegabeln nach der Abgabe der Werkstücke an den Abführrollengang durch diesen und nach einer Drehung zur Aufnahme eines neuen Werkstücks durch den Zuführrollengang hindurchtreten können.

Die Rollen des Zuführrollengangs bleiben auch über die Anlage der Werkstücke am Anschlag in der jeweiligen Wendegabel hinaus angetrieben und es kommt so bei dieser Ausführung mit Rollen als Transportmittel und insbesondere bei Verwendung von Transportbändern bzw. Transportriemen zu einem Abrieb der Transportmittel als Folge der Reibbewegung zwischen diesen und der Gratseite des nicht mehr bewegten Werkstücks. Ein Abschalten des Antriebs des Zuführrollenganges führt neben einem Mehraufwand an Steuermitteln auch zu wesentlicher Erhöhug der Transportzeiten. Die Wendegabeln können in ihrer Öffnungsweite nicht so eingestellt werden, dass sie in einem Fall Feinbleche kleinerer Dicke, im anderen Fall solche grösserer Dicke erfassen können, wenn Reibungsverschleiss und ein Überkippen nach dem Überfahren der Vertikalen vermieden werden soll.

Es ist aus der US-A-2 642 174 weiterhin eine Transporteinrichtung bekannt geworden mit parallel geführten Förderriemen. Es ist ein Zubringerförderband vorgesehen, dessen Förderoberfläche bis unter die Förderriemen der Transporteinrichtung reicht. Die vermittels des Zubringerförderbandes in den Bereich der Transporteinrichtung geführten Bleche werden gegen die Unterseite dieser gelegt und von in der Transporteinrichtung und innerhalb der Förderriemen fest installierten Elektromagnete von aussen gegen die Förderriemen gezogen. Diese Einrichtung ist aufwendig und für ein Wenden der Platinen nicht ausgelegt.

Weiterhin ist eine gattungsbildende Einrichtung aus der US-A- 3 529 710 bekannt, bei der in eine Rücklage zu wendende Werkstücke einer Wendeeinrichtung vermittels Fördermittel zugeführt und aus dieser abgeführt werden. Die Wendeeinrichtung besteht in dem Grundaufbau aus einem Rahmengestell, das über ein Stellmittel um eine erste Drehachse in eine Überkipp-Lage hochgestellt werden kann. In dem Rahmengestell sind Greifarme um eine zweite Drehachse gelagert. Die Greifarme sind einerseits mit Magneten versehen, deren jeweils eine Polseite dem aufliegenden Werkstück zugerichtet ist. Andererseits weisen die Greifarme eine gemeinsame Rollenbahn für das Werkstück bildende antriebslose Rollen auf. Nach dem Hochstellen des Rahmengestells in eine Überkipp-Lage kann das auf den Greifarmen aufliegende Werkstück um eine weitere Wendebewegung bis zur Auflage auf dem Abführ-Fördermittel abgeschwenkt werden. Zur Anlage des Werkstücks während der Wendebewegung sind an den Greifarmen Anschläge im Bereich der Drehachse der Greifarme vorgesehen. Die Magnete müssen ein- und aussteuerbar sein. Die Rollenachsen stehen senkrecht zu der Drehachse und das jeweils zu wendende Werkstück rutscht während des Hochstellens auf diesen in deren Längserstreckung abwärts. Die Rollenbahn ist zu den Polflächen der Magnete erhöht angeordnet, um ein Gegenlaufen des Werkstücks gegen die Magnete zu verhindern. Der hierdurch bedingte grosse Luftspalt verringert die Wirkung der Magnete. Um Reibung zwischen dem Zuführförderer und der aufliegenden Seite des Werkstücks bei dessen Übergang auf die Greifarme der Wendeeinrichtung zu vermeiden, muss das Fördermittel im Schrittbetrieb geschaltet werden. Es kann immer nur ein Werkstück gewendet werden.

Demgegenüber liegt die Aufgabe der Erfindung in der Schaffung einer Wendeeinrichtung für Platinen der angeführten Art, die ein Weiterlaufen des Zuführförderers und des Abführförderers vor, während und nach der Werkstückübernahme und Werkstückabgabe erlaubt, und wobei die Werkstücke in den Wender und aus diesem geführt werden ohne Reibung zwischen der Gratseite der Platinen und dem Fördermittel. Dabei soll die Wendeeinrichtung ggf. umrüstbar sein für einen Halt der Wendebewegung bei der Werkstückabgabe oder einen Halt bei der Werkstückübernahme.

Diese Aufgabe wird bei einer Wendeeinrichtung der gattungsgemässen Art gelöst durch die Merkmale des Kennzeichens von Anspruch 1.

Nach der Erfindung sind die Greifarme zu einem Drehkreuz angeordnet und es können nacheinander und fortlaufend Werkstücke in der Wendeeinrichtung aufgenommen und von dieser gewendet werden. Die die Rollenbahnen bildenden Rollen sind in ihren Drehachsen parallel zu der Drehachse der Wendeeinrichtung gelagert, so dass die zu wendenden Werkstücke (Platinen) bei dem Hochstellen gegen die Anschläge zu bringen sind. Ausser den sich aus dem schlupffreien Übergang von Zuführförderer und Greifarmrollenbahn ergebenden Vorteilen hat sich gezeigt, dass die Platine bei Drehung des Greifarmes zugeführt, wahlweise bei dessen Drehung abgeführt werden kann; dass das Werkstück bei Übergang von dem Zuführförderer auf die Greifarmrollenbahn nicht bis gegen den notwendigen Anschlag zu führen ist; dass Platinen unterschiedlicher Stärke nicht einen Austausch des Wenders oder seiner Greifelemente bedingen, und dass die Wahl, in welcher Stellung der Stopp des Wenders erfolgen soll, von dem Synchronlauf des Zubringerförderers oder des Abführförderers abhängig gemacht werden kann. Die Ausbildung der Rollen als Permanentmagnete führt zu einem massearmen Gesamtaufbau.

Weitere Vorteile ergeben sich aus der folgenden Beschreibung der Ausführungsbeispiele in den Figuren.

Dabei zeigen

Fig. 1 eine erste Wendeeinrichtung nach der Erfindung in einer wesentlich verkleinerten Vorderansicht,

Fig. 2 eine mögliche Ausgestaltung der in Fig. 1 gezeigten Wendeeinrichtung hinsichtlich der Draufsicht und

Fig. 3 eine zweite Wendeeinrichtung nach der Erfindung in einer wesentlich verkleinerten Vorderansicht.

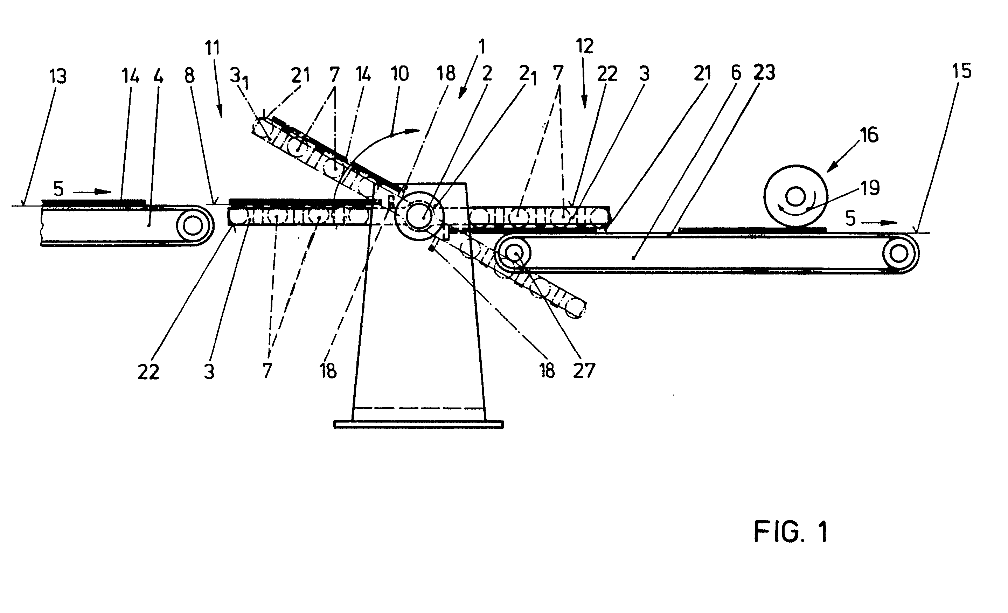

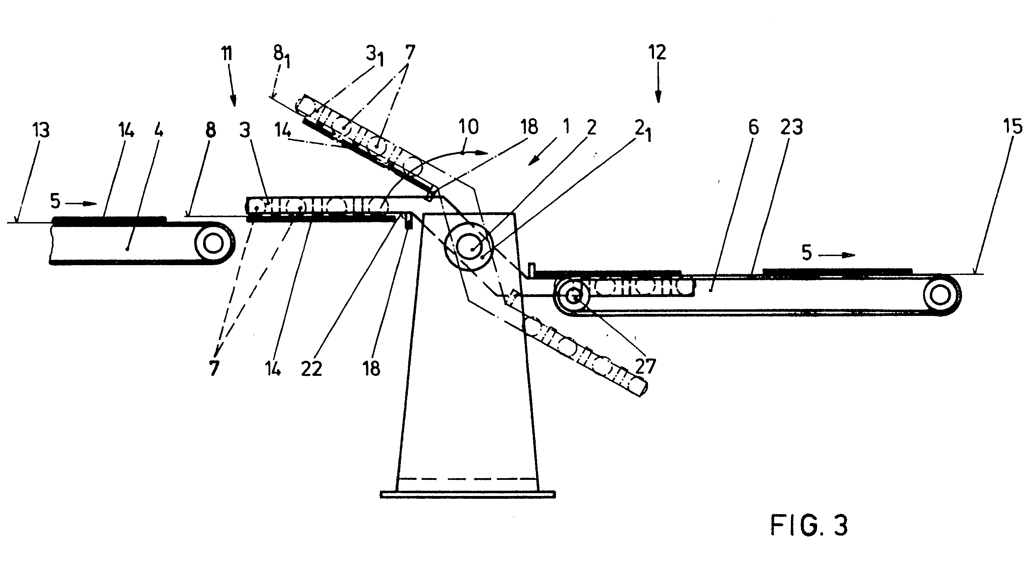

Die Wendeeinrichtung 1 besteht im wesentlichen aus dem Ständer, einem nicht gezeigten Antriebsaggregat für den Start-Stopp-Betrieb der Wendeeinrichtung, einer in Gleitlagern $2_1$ gelagerten, von dem Antriebsaggregat drehbewegbaren Welle 2 und an dieser über Distanzstücke 25 und Arretiermittel 26 festgesetzte Greifarme 3. An den Greifarmen sind Rollen 7 drehbeweglich gelagert in einer Weise, dass sie in Fig. 1 aus der Oberseite 21 der linken Arme und in Fig. 3 aus der Unterseite 22 der linken Arme überstehen. In diesen Figuren ist eine Stellung $3_1$ der Greifarme 3 in strichpunktierter Darstellungsweise angedeutet, die von den Greifarmen bei Drehung durchfahren wird und die Hinweis geben soll auf die durch die Schrägstellung erreichte Position der auf dem Greifarm (Fig. 1) bzw. unter dem Greifarm (Fig. 3) mitgeführten Platine 14. Die an den Greifarmen angebrachten Rollen 7 sind Permanentmagnete. Die Mittel zur Versorgung dieser mit elektrischer Energie sind gleichfalls nicht gezeigt. Im linken Bildbereich ist jeweils ein Zuführfördermittel 4 angedeutet, das Platinen 14 bis in den Übernahmebereich 11 in Richtung des Pfeiles 5 führt. Die Position 6 verweist auf einen Abführförderer, der in seinem linken Bereich in den Bewegungs- bzw. Schwenkbereich (Abgabebereich 12) der Greifarme 3 der Wendeeinrichtung 1 geführt ist zur Übernahme der Platinen 14 aus der Wendeeinrichtung 1. Der Abgabebereich der Platinen 14 an den Abführförderer 6 ist mit 12 gekennzeichnet. Oberhalb der Platine 14 auf dem Abführförderer 6 ist eine Bearbeitungsstation 16 angedeutet, die eine Entgrateinrichtung, wie beispielsweise eine Flächenschleifmaschine, sein kann. Die Förderrichtung ist auch hier mit einem Pfeil 5 positioniert, während die Oberflächenbearbeitung in gegenläufiger Richtung (Pfeil 19) erfolgen kann.

Die Gesamtheit der Rollen 7 an den Greifarmen 3 bilden eine Rollenbahnebene 8 an der Greifarmoberfläche 21, die in Fig. 1 mit der Transportebene 13 des Zuführförderers 4 fluchtet, die in Fig. 3 um eine Verstellmass, das sich aus der Stärke der Platine ergibt, höher angeordnet ist als die Transportebene des Zuführförderers 4. Im Abgabebereich 12 befindet sich die Rollenbahnebene 8 der Rollen 7 an dem um 180 Winkelgrad in Pfeilrichtung 10 verschwenkten Greifarm 3 um ein Mass, das der Dicke der Platine entspricht, oberhalb der Transportebene 15 des Abführförderers.

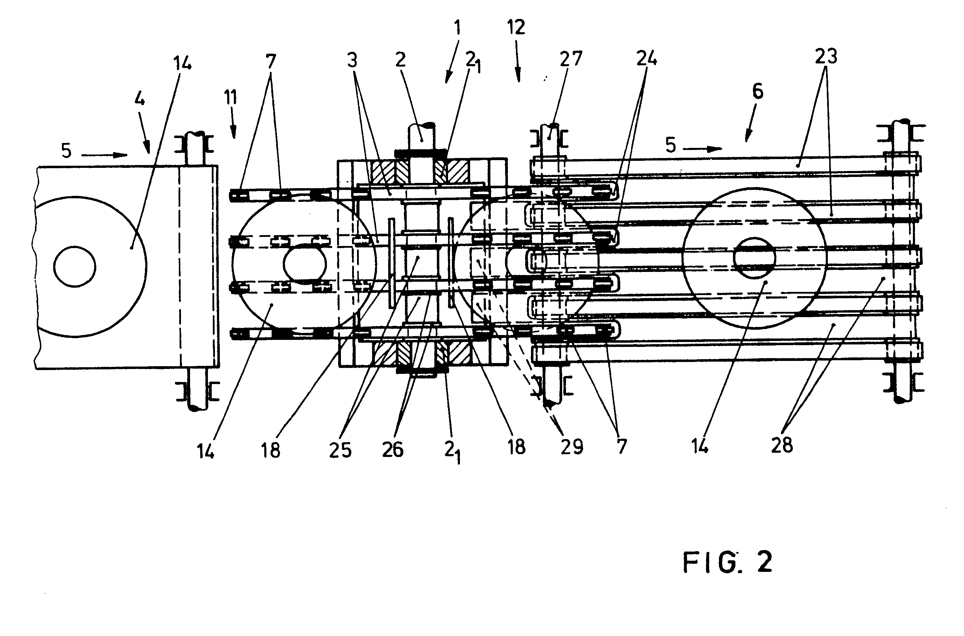

Fig. 2 zeigt gleiche Elemente wie Fig. 1. Der Ständer der Wendeeinrichtung ist in Höhe der Lagerstelle der Welle 2 geöffnet dargestellt. Die Lagerung der Welle 2 erfolgt über Gleitlager $2_1$, die Greifarme 3 sind über Distanzstücke 25 und Arretiermittel 26 an der Welle befestigt. Während im Übernahmebereich 11 der Zuführförderer 4 zu den Greifarmen 3 beabstandet ist, greift der Abführförderer 6 im Abgabebereich 12 in den Bewegungs- bzw. Drehbereich der Greifarme 3. Die Förderbänder 23 sind hierzu beidseitig an den Greifarmen 3 orientiert; sie lassen somit Durchtritte 24 für die Greifarme frei. Zur Abstützung insbesondere der losen Welle 27 am Abführförderer 6 dienen Streben 28, die an dem Ständer der Wendeeinrichtung 1 bei 29 orientiert sein können.

Die Funktionsweise der in den Fig. 1 und 2 gezeigten Wendeeinrichtung ist folgende: Die vom Zuführförderer 4 zur Wendeeinrichtung 1 geführten Platinen 14 werden im Übernahmebereich auf einen der Greifarme geschoben. Diese kommen hierbei nicht zur Anlage an dem vorgesehenen Anschlag 18. Die Übergabe kann beispielsweise während eines Weiterdrehens der Greifarme erfolgen. Für den Fall, dass sich eine Platine am gegenüberliegenden Greifarm im Abgabebereich 12 befindet, muss die Wendeeinrichtung angehalten werden. Die vom links gezeigten Greifarm übernommene Platine 14 kommt infolge des Rollenganges 7 bei kurzer Drehung zur Anlage an dem Anschlag 18, strichpunktiert angedeutete Greifarmstellung, und wird bei Weiterdrehung über die Vertikale hinaus durch die Magnetkräfte der permanentmagnetischen Rollen 7 gehalten. In dem Abgabebereich 12 werden die Platinen von dem sich bewegenden Abführförderer erfasst und aus dem Bereich herausgeführt.

In Fig. 3 sind gleiche Teile wie in den zuvor beschriebenen Figuren gleich beziffert. Die Rollen 7 bilden hier im Übernahmebereich 11 eine Rollenbahnebene 8 bzw. für die Schrägstellung $8_1$ an der Greifarmunterfläche 22. Auch hier wird die von der Wendeeinrichtung 1 zu übernehmende Platine 14 nicht unbedingt bis an den Anschlag 18 geführt. Diese Stellung erreicht die Platine bei Drehung, wie es strichpunktiert dargestellt worden ist. Die Übernahme einer Platine von dem links von der Wendeeinrichtung gezeigten Greifarm 3 bedingt einen Stillstand des Wenders. Die Abgabe der Platine an den Abführförderer 6 kann aus einer Bewegung der Greifarme erfolgen, wenn ein Stopp in dem Übernahmebereich 11 nicht erfolgt ist. Das Lösen der Platine von den permanentmagnetischen Rollen 7 erfolgt durch die Transportbewegung der Förderbänder 23 des Abführförderers 6. Die Steuerung der Bewegung der Wendeeinrichtung, die Abfrage des Beladungszustandes erfolgt über z.B. berührungslose Abtastorgane. Diese Abfragemittel sind gleichfalls nicht dargestellt; sie sind auch in ihrer Anordnung an den Greifarmen ohne weiteres vorstellbar.

## Patentansprüche

1. Wendeeinrichtung zum Wenden von Platinen in einer Förderstrecke zwischen zwei Bearbeitungsmaschinen, insbesondere zum Wenden mit Grat versehener, magnetisierbarer Platinen (14) vor einer Entgrateinrichtung (16), mit die Platinen (14) in eine Rücklage umlegenden, um eine Drehachse (2) beweglich antreibbaren Greifarmen (3), einem ersten, die Platinen treibenden Fördermittel (4) zum Zuführen der Platinen (14) zu der Wendeeinrichtung (1) und einem zweiten, die Platinen treibenden, zumindest teilweise den Bewegungsbereich (12) der Greifarme (3) überdeckenden Fördermittel (6) zwischen Wendeeinrichtung (1) und Entgrateinrichtung (16), wobei jeder Greifarm (3) eine Rollenbahnebene (8) bildende antriebslose Rollen (7) aufweist, die Rollenbahnebene (8) eines jeden Greifarmes (3) in eine erste Drehstellung für die Übernahme der Platinen (14) im wesentlichen fluchtend zu der Transportebene (13) des ersten Fördermittels (4) und in eine zweite Drehstellung für die Abgabe der Platinen (14) im wesentlichen fluchtend zu der Tansportebene des zweiten Fördermittels (6) gebracht werden kann, und wobei am Ende der Rollenbahnebenen (8) und der Drehachse (2) der Greifarme (3) nahe Anschläge (18) vorgesehen sind, dadurch gekennzeichnet, dass die Rollen (7) als Permanentmagnete ausgebildet sind, so dass die Platinen (14) gehalten werden.

2. Wendeeinrichtung nach Anspruch 1, dadurch gekennzeichnet, dass die Rollenbahnebene (8) durch Herausragen der Rollen (7) aus der Greiferarmoberfläche (21) oberhalb des Greifarmes (3) gebildet ist in Bezug auf die Werkstückübernahmestellung (11).

3. Wendeeinrichtung nach Anspruch 1, dadurch gekennzeichnet, dass die Rollenbahnebene (8) durch Herausragen der Rollen (7) aus der Greiferarmunterfläche (22) unterhalb des Greifarmes (3) gebildet ist in Bezug auf die Werkstückübernahmestellung (11).

## Claims

1. Turning device for the turning of plate bars in a conveying zone between two processing machines, in particular for the turning of burred, magnetizable plate bars (14) ahead of a deburring device (16), with gripping arms (3) which can be driven movably about an axis of rotation (2) and turn the plate bars (14) over into a reverse position, a first means of conveyance (4), driving the bar plates, for feeding the bar plates (14) to the turning device (1) and a second means of conveyance (6), driving the bar plates, which at least partially covers the range of movement (12) of the gripping arms (3) and is between turning device (1) and deburring device (16), each gripping arm (3) having idling rollers (7) forming a roller track level (8), it being possible for the roller track level (8) of each gripping arm (3) to be moved into a first rotational position for take-over of the plate bars (14) essentially in alignment with the transport level (13) of the first means of conveyance (4) and into a second rotational position for delivery of the plate bars (14) essentially in alignment with the transport level of the second means of conveyance (6), and stops (18) being provided at the end of the roller track levels (8) and close to the axis of rotation (2) of the gripping arms (3), characterized in that the rollers (7) are designed as permanent magnets, so that the plate bars (14) are held.

2. Turning device according to Claim 1, characterized in that the roller track level (8) is formed above the gripping arm (3), with respect to the workpiece take-over position (11), by protrusion of the rollers (7) from the gripper arm upper surface (21).

3. Turning device according to Claim 1, characterized in that the roller track level (8) is formed below the gripping arm (3), with respect to the workpiece take-over position (11), by protrusion of the rollers (7) from the gripper arm lower surface (22).

## Revendications

1. Dispositif de retournement pour retourner des flans sur une ligne de transport entre deux machines d'usinage, en particulier pour retourner des flans (14) magnétisables, présentant des bavures, avant un dispositif d'ébavurage (16), comportant des bras de saisie (3) qui renversent les flans (14) dans une position où ils sont maintenus et qui peuvent être mis en mouvement autour d'un axe de rotation (2), comportant aussi un premier transporteur (4) qui entraîne les flans (14) pour les amener au dispositif de retournement (1), ainsi qu'un second transporteur (6) qui entraîne les flans, qui recouvre au moins partiellement la zone de déplacement (12) des bras de saisie (3) et qui est situé entre le dispositif de retournement (1) et le dispositif d'ébavurage (16), étant précisé que chaque bras de saisie (3) présente des rouleaux (7) non entraînés qui forment un plan de chemin de roulement (8), que le plan de chemin de roulement (8) de chacun des bras de saisie (3) peut être amené dans une première position de rotation pour la reprise des flans (14) sensiblement affleurante au plan de transport (13) du premier transporteur (4) et dans une seconde position de rotation pour la dépose des flans (14) sensiblement affleurante au plan de transport du second transporteur (6), et qu'à l'extrémité des plans de chemin de roulement (8) et de l'axe de rotation (2) des bras de saisie (3) sont prévues des butées proches (8), caractérisé en ce que les rouleaux (7) sont conçus sous forme d'aimants permanents de sorte que les flans (14) sont maintenus.

2. Dispositif de retournement selon la revendication 1, caractérisé en ce que le plan de chemin de roulement (8) est formé par le fait que les rouleaux (7) dépassent de la surface (21) du bras de saisie au-dessus du bras de saisie (3), considéré à la position (11) de reprise de la pièce.

3. Dispositif de retournement selon la revendication 1, caractérisé en ce que le plan de chemin de roulement (8) est formé par le fait que les rouleaux (7) dépassent de la surface (22) du bras de saisie au-dessous du bras de saisie (3), considéré à la position (11) de reprise de la pièce.

FIG. 1

FIG. 2

0 101 025

FIG. 3